# EUROPÄISCHE PATENTSCHRIFT

(11) **EP 2 722 215 B1**
(45) Veröffentlichungstag und Bekanntmachung des Hinweises auf die Patenterteilung: **06.01.2021**
(21) Anmeldenummer: 13188765.5
(22) Anmeldetag: 15.10.2013
(51) Int. Cl.: B60L 3/00, B60L 3/12, B60D 1/24, B60D 1/60, B62D 59/04

(54) **Rangierantrieb mit Überwachungsmodul**
Manoeuvring drive with monitoring module
Entraînement de rangement avec module de surveillance

(30) Priorität: 22.10.2012 DE 202012010042 U
(43) Veröffentlichungstag der Anmeldung: 23.04.2014
(73) Patentinhaber: Truma Gerätetechnik GmbH & Co. KG, 85640 Putzbrunn (DE)
(72) Erfinder: Aemisegger, Steve, 81547 München (DE); Gumpp, Daniel, 86356 Neusäss (DE); Müller, Jochen, 85665 Moosach (DE); Schmid, Tobias, 85435 Erding (DE); Müssler, Klaus, 85235 Egenburg (DE); Fernandez, Ana María, 81739 München (DE); Müller, Jörg, 85658 Egmating (DE); Schaurer, Oliver, 85445 Oberding (DE); Möhring, Mario, 85408 Gammelsdorf (DE); Venschott, Mathias, 81825 München (DE); Thiel, Stefan, 83022 Rosenheim (DE); Zawadski, Kamil, 85540 Haar (DE)
(74) Vertreter: Prinz & Partner mbB

(56) Entgegenhaltungen:
- EP-A1- 1 564 121
- EP-A2- 1 679 251
- EP-A2- 1 801 003
- GB-A- 2 472 461

## Beschreibung

Die Erfindung betrifft einen Rangierantrieb für einen Anhänger.

Bei diesem Anhänger kann es sich beispielsweise um einen Wohnwagen, einen Bootsanhänger, einen Pferdeanhänger, einen Marktanhänger oder Ähnliches handeln. Dieser wird üblicherweise von einer Zugmaschine gezogen. Für einen Wohnwagen dient meist ein Pkw als Zugmaschine. Um den Anhänger in seine endgültige Position zu bringen, beispielsweise auf einem Campingplatz, wird er üblicherweise von der Zugmaschine abgekoppelt und von Hand in die endgültige Position geschoben. Dies ist oft aber mit größeren Anstrengungen verbunden, da mit steigenden Anforderungen an den Komfort solcher Wohnwagen auch deren Gewicht steigt.

Um das Rangieren zu erleichtern, können Anhänger mit Rangierantrieben ausgestattet werden. Bei einem Rangierantrieb handelt es sich um einen Hilfsantrieb, der meist für jedes Rad des Anhängers eine Antriebseinheit mit einem Elektromotor aufweist. Die Elektromotoren werden von einer Batterie im Anhänger mit elektrischer Energie versorgt und können mit den Rädern des Anhängers gekoppelt werden, um diese anzutreiben und damit den Anhänger zu rangieren.

Aus Sicherheitsgründen darf der Rangierantrieb nur dann aktiviert werden können, wenn der Anhänger von der Zugmaschine abgekoppelt ist. Würde versucht werden, den Anhänger mittels der Antriebseinheiten zu verfahren, solange er mit der Zugmaschine gekoppelt ist, kann dies zu einer Beschädigung der Zugmaschine und/oder des Anhängers führen. Außerdem muss gewährleistet werden, dass die Antriebseinheiten von den Rädern des Anhängers gelöst sind, wenn der Anhänger mit der Zugmaschine gekoppelt ist, um von dieser verfahren zu werden; andernfalls könnten die Antriebseinheiten, der Anhänger und/oder die Zugmaschine aufgrund der Bremswirkung der Antriebseinheiten beschädigt werden.

Die EP 1 679 251 A2 beschreibt einen Rangierantrieb für einen Anhänger, wobei zwei Räder von Antriebseinheiten angetrieben werden können, wenn diese mit den Rädern in Eingriff sind. Wenn der Anhänger mit einer Zugmaschine gekoppelt wird, wird eine Bewegung der Antriebseinheiten blockiert oder rückgängig gemacht, sodass die Antriebseinheiten nicht mit den Rädern in Eingriff sein können, wenn der Anhänger von einer Zugmaschine gezogen wird. Zusätzlich kann ein Alarmsignal abgegeben werden, welches darauf hinweisen soll, dass die Antriebseinheiten blockiert wurden.

Die Aufgabe der Erfindung besteht darin, einen Rangierantrieb zu schaffen, bei dem verhindert wird, dass ein Benutzer versehentlich den Anhänger mit der Zugmaschine koppelt und dann die Antriebseinheiten in einem Rangierzustand belässt, in welchem diese an den Rädern des Anhängers angreifen.

Zur Lösung dieser Aufgabe ist erfindungsgemäß ein Rangierantrieb für einen Anhänger geschaffen, mit einer Steuerung und mehreren Antriebseinheiten, die Rädern des Anhängers zugeordnet sind, wobei die Antriebseinheiten zwischen einem inaktiven Zustand, in welchem sie nicht mit den Rädern des Anhängers in Eingriff sind, und einem Rangierzustand verstellbar sind, in welchem sie mit den Rädern des Anhängers in Eingriff sind, wobei die Steuerung ein Überwachungsmodul aufweist, das mindestens einen Zustandsparameter überwacht und eine Warnung erzeugt, wenn sich mindestens eine Antriebseinheit im Rangierzustand befindet und der Zustandsparameter darauf hindeutet, dass der Anhänger mittels einer Zugmaschine bewegt werden soll. Der Zustandsparameter ist ein Signal von einer Deichseldose, dass ein Deichselstecker aus der Deichseldose entfernt wurde, und/oder ein Ausschalten einer Fernbedienung zum Steuern des Rangierantriebs. Die Erfindung beruht auf dem Grundgedanken, mittels des Überwachungsmoduls eine Plausibilitätsüberprüfung vorzunehmen. Wenn ein Zustandsparameter erfasst wird, der üblicherweise darauf hindeutet, dass der Anhänger nicht mehr weiter rangiert werden soll, wird der Bediener durch die Warnung informiert.

Üblicherweise wird überwacht, ob ein Deichselstecker des Anhängers in die Deichseldose eingesteckt ist. Wird erfasst, dass der Deichselstecker aus der Deichseldose entfernt wird, deutet dies darauf hin, dass der Bediener den Anhänger mit der Zugmaschine koppelt. Der Bediener wird dann mittels der Warnung darauf hingewiesen, dass die Antriebseinheiten sich noch im Rangierzustand befinden.

Wenn ein Bediener die Fernbedienung ausschaltet, kann erwartet werden, dass er den Rangiervorgang abgeschlossen hat. Üblicherweise sollte der Rangiervorgang damit beendet werden, dass die Antriebseinheiten wieder in einen inaktiven Zustand zurückgestellt werden. Wird dies unterlassen, kann der Bediener durch die Warnung hieran erinnert werden. Dabei ist es unschädlich, wenn die Warnung nicht nur nach dem Ankoppeln des Anhängers an eine Zugmaschine erzeugt wird, sondern auch nach Abschluss eines Rangiervorgangs, mit dem der Anhänger von einer Zugmaschine weg zu einer Abstellposition rangiert wurde; da die Antriebseinheiten nicht als Ersatz für eine Parkbremse und eine ordnungsgemäße Sicherung des Anhängers gegen Wegrollen gedacht sind, schadet auch in diesem Fall die Warnung nicht.

Bei der Warnung kann es sich um ein Tonsignal oder um ein Vibrationssignal handeln. Die beiden Signale können entweder unmittelbar in den Antriebseinheiten erzeugt werden, beispielsweise durch ein gezieltes Ansteuern der Rotoren der Antriebsmotoren der Antriebseinheit derart, dass diese um eine Mittelposition herum kleine oszillierende Bewegungen ausführen. Die Warnung kann alternativ oder kumulativ auch in der Fernbedienung selbst erzeugt werden.

Zusätzlich kann vorgesehen sein, dass ein Lichtsignal erzeugt wird.

Gemäß einer Ausgestaltung der Erfindung ist vorgesehen, dass die Fernbedienung nach einem Ausschaltsignal noch eine vorbestimmte Zeitdauer aktiv bleibt. Dies ermöglicht es der Fernbedienung, die Warnung in der Form beispielsweise eines Vibrationssignals, eines Lichtsignals oder eines Tonsignals zu erzeugen, auch nachdem der Bediener einen Ausschaltbefehl gegeben hat.

Die Erfindung wird nachfolgend anhand einer Ausführungsform beschrieben, die in den beigefügten Zeichnungen dargestellt ist. In diesen zeigen:
- Figur 1 in einer schematischen Seitenansicht einen Anhänger mit Rangierantrieb;
- Figur 2 in einer schematischen Draufsicht den Anhänger von Figur 1; und

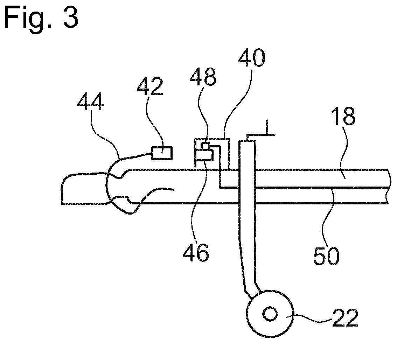

- Figur 3 schematisch in vergrößertem Maßstab den Ausschnitt III von Figur 1.

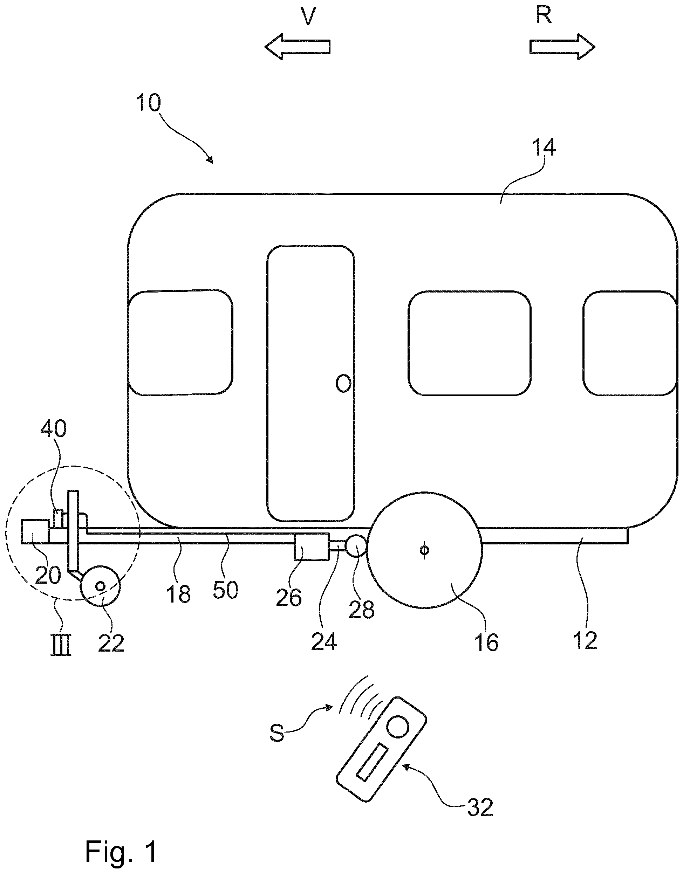

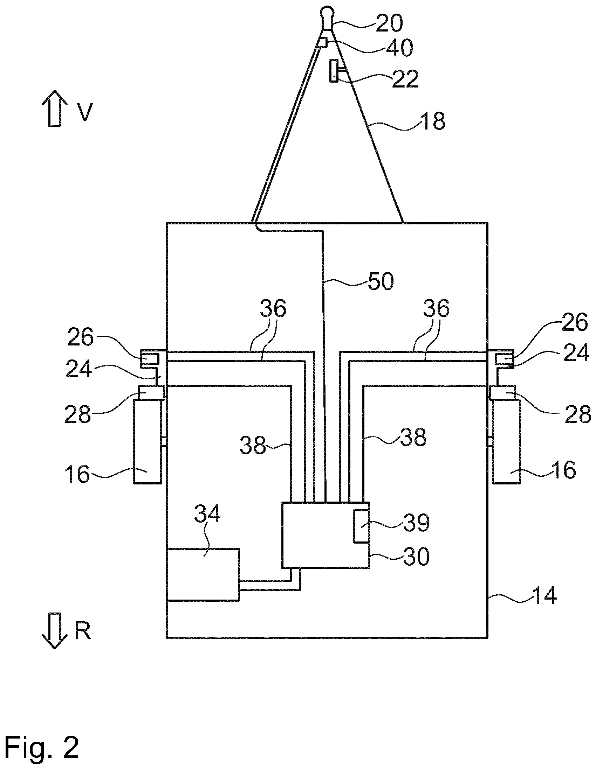

In den Figuren 1 und 2 ist schematisch ein Anhänger 10 (hier ein Wohnwagen) gezeigt, der einen Rahmen 12 aufweist, an dem ein Aufbau 14 angebracht ist. Weiterhin sind zwei Räder 16, eine Deichsel 18 und eine Kupplung 20 vorgesehen. Mit der Kupplung 20 kann der Anhänger 10 an eine Zugmaschine angekoppelt werden. An der Deichsel 18 ist ein Hilfsrad 22 angebracht, welches im abgekoppelten Zustand zum Abstützen des Anhängers 10 dient.

Jedem Rad 16 des Anhängers 10 ist eine Antriebseinheit 24 zugeordnet. Jede Antriebseinheit 24 weist einen Antriebsmotor 26 auf, der üblicherweise als Elektromotor ausgeführt ist, sowie eine Antriebsrolle 28, die vom Antriebsmotor 26 angetrieben werden kann. Die Antriebsrolle 28 kann mit dem zugeordneten Rad 16 des Anhängers 10 in Eingriff gebracht werden.

Weiterhin ist eine Zentraleinheit 30 vorgesehen, die als zentrale Steuerung für die Antriebseinheiten 24 dient und auch für die Kommunikation mit einem Bediener zuständig ist. Dieser kann beispielsweise über eine schematisch in Figur 1 gezeigte Fernbedienung 32 beispielsweise eine Geradeausfahrt oder eine Kurvenfahrt vorgeben.

Im Anhänger 10 ist außerdem eine Spannungsquelle 34 vorgesehen, mittels der die Zentraleinheit 30 und die Antriebseinheiten 24 mit elektrischer Energie versorgt werden können. Die Spannungsquelle kann ein Netzteil sein, das an eine externe Steckdose angeschlossen ist, oder ein Energiespeicher, der sich an Bord des Anhängers befindet. In diesem Fall handelt es sich beim Energiespeicher 34 üblicherweise um einen Akkumulator, umgangssprachlich oft auch als Batterie bezeichnet. Die Antriebsmotoren 26 sind dabei über Anschlussleitungen 36 mit der Zentraleinheit verbunden. Ferner ist für jede Antriebseinheit mindestens eine Steuerleitung 38 vorgesehen, die sich von der Zentraleinheit 30 zu jeder Antriebseinheit 24 erstreckt.

Die Antriebseinheiten 24 zusammen mit der Zentraleinheit 30 bilden einen Rangierantrieb, mit dem der Anhänger 10 verfahren werden kann. Zu diesem Zweck werden die Antriebsrollen 28 in Eingriff mit den Rädern 16 des Anhängers gebracht, sodass sie, wenn sich die Antriebsmotoren 26 drehen, die Räder 16 antreiben. Dies ist grundsätzlich aus dem Stand der Technik bekannt.

Als Ausführungsbeispiel ist hier ein einachsiger Anhänger gezeigt. Dementsprechend weist der Anhänger 10 zwei Räder 16 auf, denen jeweils eine Antriebseinheit 24 zugeordnet ist. Grundsätzlich kann derselbe Rangierantrieb auch bei einem zweiachsigen Anhänger eingesetzt werden. Dabei können weiterhin insgesamt lediglich zwei Antriebseinheiten verwendet werden, sodass auf jeder Seite des Anhängers ein angetriebenes und ein nicht angetriebenes Rad vorhanden ist, oder es können auf jeder Seite des Anhängers zwei Antriebseinheiten eingesetzt werden, sodass jedes Rad des Anhängers angetrieben werden kann.

In die Zentraleinheit 30, welche die Steuerung für die Antriebseinheiten darstellt, ist ein Überwachungsmodul 39 integriert, mit dem verschiedene Zustandsparameter des Rangierantriebs überwacht werden können. Einer der Zustandsparameter stammt von einer Deichseldose 40, in die ein Deichselstecker 42 eingesteckt werden kann. Der Deichselstecker 42 kann in eine Zugmaschinendose eingesteckt werden, sodass über ein Kabel 44 verschiedene Beleuchtungskreise des Anhängers, beispielsweise Rückleuchten und Bremsleuchten, mit den entsprechenden elektrischen Kreisen der Zugmaschine verbunden werden können. Um zu gewährleisten, dass der Rangierantrieb nicht aktiviert wird, solange der Deichselstecker 42 in die Zugmaschinendose eingesteckt ist, ist die Deichseldose 40 vorgesehen. Um den Rangierantrieb aktivieren zu können, nachdem der Anhänger 10 von der Zugmaschine abgekoppelt wurde, muss der Deichselstecker 42 in eine Aufnahme 46 der Deichseldose 40 eingesteckt werden. Erst wenn dies erkannt wird, beispielsweise über einen Sensor 48, der mittels einer Freigabeleitung 50 mit der Zentraleinheit 30 verbunden ist, können die Antriebsrollen 28 aus einem Ausgangszustand, in welchem sie nicht an den Rädern 16 des Anhängers 10 angreifen, in einen aktivierten Zustand verstellt werden, in welchem sie mit den Rädern 16 in Eingriff sind und diese antreiben können.

Wenn das Überwachungsmodul 39 erfasst, dass der Deichselstecker 42 aus der Deichseldose 40 herausgezogen wird, solange sich die Antriebsrollen 28 in Eingriff mit den Rädern 16 befinden, wird dies als unplanmäßiger Zustand interpretiert, auf den der Bediener mittels einer Warnung aufmerksam gemacht wird. Diese Warnung kann insbesondere als Vibrations- und/oder Tonsignal erfolgen, das von der Fernbedienung 32 erzeugt wird (siehe das schematisch in Figur 1 angedeutete Signal S). Zusätzlich kann ein Lichtsignal an den Antriebseinheiten erzeugt werden.

Ein weiterer Zustandsparameter, der vom Überwachungsmodul 39 als kritisch eingestuft wird, besteht darin, dass das Überwachungsmodul 39 das Ausschalten der Fernbedienung erfasst, solange sich die Antriebsrollen 28 in Eingriff mit den Rädern 16 des Anhängers 10 befinden. Bei einer ordnungsgemäßen Bedienung des Rangierantriebs endet jeder Rangiervorgang damit, dass die Antriebseinheiten in ihren inaktiven Zustand zurückgestellt werden, in welchem die Antriebsrollen 28 von den Rädern 16 gelöst sind. Wird der Rangierantrieb abgeschaltet, bevor die Antriebseinheiten 24 in den inaktiven Zustand zurückgestellt wurden, besteht das Risiko, dass der Bediener den Anhänger an die Zugmaschine ankoppelt und dabei vergisst, die Antriebseinheiten in den inaktiven Zustand zurückzustellen. Auch in diesem Fall wird eine Warnung erzeugt. Dabei ist es vorteilhaft, dass die Fernbedienung 32, obwohl ein Bediener sie ausgeschaltet hat, tatsächlich im Hintergrund noch einige Zeit aktiv bleibt, um es dem Überwachungsmodul 39 zu ermöglichen, über die Fernbedienung das Warnsignal S zu erzeugen, beispielsweise ein Licht- und/oder ein Tonsignal.

Das Warnsignal kann auch an anderer Stelle als in der Fernbedienung 32 erzeugt werden. Beispielsweise kann in der Zentraleinheit 30 ein Warnton erzeugt werden. Es ist auch möglich, dass die Zentraleinheit, wenn das Überwachungsmodul 39 eine Warnung an den Bediener für angezeigt hält, die Rotoren der Antriebsmotoren so ansteuert, dass diese eine oszillierende Bewegung um eine Mittellage mit einer solchen Frequenz ausführen, dass die Bewegung als Tonsignal wahrgenommen wird.

## Patentansprüche

1. Rangierantrieb (24, 30) für einen Anhänger (10), mit einer Steuerung (30) und mehreren Antriebseinheiten (24), die Rädern (16) des Anhängers (10) zugeordnet sind, wobei die Antriebseinheiten (24) zwischen einem inaktiven Zustand, in welchem sie nicht mit den Rädern (16) des Anhängers (10) in Eingriff sind, und einem Rangierzustand verstellbar sind, in welchem sie mit den Rädern (16) des Anhängers (10) in Eingriff sind, wobei die Steuerung (30) ein Überwachungsmodul (39) aufweist, das mindestens einen Zustandsparameter überwacht und eine Warnung (S) erzeugt, wenn sich mindestens eine Antriebseinheit (24) im Rangierzustand befindet und der Zustandsparameter darauf hindeutet, dass der Anhänger (10) mittels einer Zugmaschine bewegt werden soll, **dadurch gekennzeichnet, dass** der Zustandsparameter ein Signal von einer Deichseldose (40) ist, dass ein Deichselstecker (42) aus der Deichseldose (40) entfernt wurde, und/oder ein Ausschalten einer Fernbedienung (32) zum Steuern des Rangierantriebs (24, 30) ist.

2. Rangierantrieb nach Anspruch 1, **dadurch gekennzeichnet, dass** die Warnung ein Tonsignal ist.

3. Rangierantrieb nach einem der vorhergehenden Ansprüche, **dadurch gekennzeichnet, dass** die Warnung ein Vibrationssignal ist.

4. Rangierantrieb nach einem der vorhergehenden Ansprüche, **dadurch gekennzeichnet, dass** die Fernbedienung (32) nach dem Ausschalten noch eine vorbestimmte Zeitdauer aktiv bleibt.

5. Rangierantrieb nach Anspruch 4, **dadurch gekennzeichnet, dass** die Warnung in der Fernbedienung (32) erzeugt wird.

6. Rangierantrieb nach einem der vorhergehenden Ansprüche, **dadurch gekennzeichnet, dass** die Warnung in einer Antriebseinheit (24) erzeugt wird.

## Claims

1. A maneuvering drive (24, 30) for a trailer (10), comprising a control unit (30) and a plurality of drive units (24) which are associated with wheels (16) of the trailer (10), the drive units (24) being adjustable between an inactive state, in which they do not engage the wheels (16) of the trailer (10), and a maneuvering state, in which they engage the wheels (16) of the trailer (10), the control unit (30) including a monitoring module (39) which monitors at least one status parameter and generates a warning (S) when at least one drive unit (24) is in the maneuvering state and the status parameter suggests that the trailer (10) is to be moved by means of a towing vehicle, **characterized in that** the status parameter is a signal from a drawbar socket (40) that a drawbar plug (42) has been removed from the drawbar socket (40), and/or is a switch-off of a remote control (32) for controlling the maneuvering drive (24, 30).

2. The maneuvering drive according to claim 1, **characterized in that** the warning is an audio signal.

3. The maneuvering drive according to either of the preceding claims, **characterized in that** the warning is a vibration signal.

4. The maneuvering drive according to any of the preceding claims, **characterized in that** the remote control (32) remains active for a predetermined period of time after switch-off.

5. The maneuvering drive according to claim 4, **characterized in that** the warning is generated in the remote control (32).

6. The maneuvering drive according to any of the preceding claims, **characterized in that** the warning is generated in a drive unit (24).

## Revendications

1. Entraînement de manœuvre (24, 30) pour une remorque (10), comprenant une commande (30) et une pluralité d'unités d'entraînement (24) qui sont associées à des roues (16) de la remorque (10), les unités d'entraînement (24) étant aptes à être déplacées entre un état inactif dans lequel elles ne sont pas en prise avec les roues (16) de la remorque (10), et un état de manœuvre dans lequel elles sont en prise avec les roues (16) de la remorque (10), la commande (30) présentant un module de surveillance (39) qui surveille au moins un paramètre d'état et génère une alerte (S) lorsqu'au moins une unité d'entraînement (24) se trouve dans un état de manœuvre et le paramètre d'état indique que la remorque (10) doit être déplacée au moyen d'un véhicule tracteur, **caractérisé en ce que** le paramètre d'état est un signal provenant d'une douille de timon (40) qu'un connecteur de timon (42) a été retiré de la douille de timon (40), et/ou un arrêt d'une télécommande (32) pour la commande de l'entraînement de manœuvre (24, 30).

2. Entraînement de manœuvre selon la revendication 1, **caractérisé en ce que** l'alerte est un signal sonore.

3. Entraînement de manœuvre selon l'une des revendications précédentes, **caractérisé en ce que** l'alerte est un signal vibrant.

4. Entraînement de manœuvre selon l'une des revendications précédentes, **caractérisé en ce que** la télécommande (32) reste encore active pendant une durée de temps prédéterminée après l'arrêt.

5. Entraînement de manœuvre selon la revendication 4, **caractérisé en ce que** l'alerte est générée dans la télécommande (32).

6. Entraînement de manœuvre selon l'une des revendications précédentes, **caractérisé en ce que** l'alerte est générée dans une unité d'entraînement (24).
